# EUROPÄISCHE PATENTSCHRIFT

(11) **EP 0 850 357 B1**
(45) Veröffentlichungstag und Bekanntmachung des Hinweises auf die Patenterteilung: **20.06.2001**
(21) Anmeldenummer: 97915317.8
(22) Anmeldetag: 28.02.1997
(51) Int. Cl.: F02M 51/06

(54) **VENTILNADEL UND VERFAHREN ZUR HERSTELLUNG EINER VENTILNADEL**
VALVE NEEDLE AND METHOD FOR PRODUCING A VALVE NEEDLE
POINTEAU DE SOUPAPE ET PROCEDE DE PRODUCTION CORRESPONDANT

(30) Priorität: 11.07.1996 DE 19627939
(43) Veröffentlichungstag der Anmeldung: 01.07.1998
(73) Patentinhaber: ROBERT BOSCH GMBH, 70442 Stuttgart (DE)
(72) Erfinder: REITER, Ferdinand, D-71706 Markgröningen (DE)
(86) Internationale Anmeldenummer: DE9700364
(87) Internationale Veröffentlichungsnummer: WO9802657

(56) Entgegenhaltungen:
- DE-A- 3 705 805
- DE-A- 3 914 486
- DE-A- 4 420 176
- DE-A- 4 426 006
- DE-A- 19 504 882
- DE-A- 19 533 290
- US-A- 3 669 407

## Beschreibung

### Stand der Technik

Die Erfindung geht aus von einer Ventilnadel für ein elektromagnetisch betätigbares Ventil nach der Gattung des Anspruches 1 bzw. einem Verfahren zur Herstellung einer Ventilnadel nach der Gattung des Anspruches 10. Aus der DE 44 20 176 Al ist bereits eine Ventilnadel für ein elektromagnetisch betätigbares Ventil bekannt, die aus einem Anker, einem Verbindungsteil und einem durch das Verbindungsteil mit dem Anker verbundenen Ventilschließglied besteht. Dabei ist das Verbindungsteil aus einem einen profilierten Querschnitt aufweisenden Halbzeug gefertigt. Um zwischen dem Umfang des Verbindungsteiles und der Wandung einer Halteöffnung im Anker, in die das Verbindungsteil ragt, wenigstens einen ausreichend großen Strömungskanal für das Medium zu gewährleisten, hat das Verbindungsteil eine relativ große Erstreckung senkrecht zu seiner Längsachse, was zu einer relativ großen Masse der Ventilnadel führt, die zu einer Verzögerung der durch einen Elektromagneten bewirkten Ventilbetätigung führt.

### Vorteile der Erfindung

Die erfindungsgemäße Ventilnadel mit den kennzeichnenden Merkmalen des Anspruches 1 bzw. das Verfahren zur Herstellung einer Ventilnadel mit den kennzeichnenden Merkmalen des Anspruches 10 haben den Vorteil einer auf einfache Art und Weise gebildeten Ventilnadel, die eine geringe Masse aufweist und damit schneller durch den Elektromagneten betätigbar ist. Das aus einem stangenförmigen Halbzeug bzw. Draht mit kreisrundem Querschnitt gebildete Verbindungsteil ermöglicht trotz des geringen Durchmessers wegen der erfindungsgemäßen Ausgestaltung ausreichend große Strömungskanäle zwischen dem Ankerkopf und dem Anker.

Durch die in den Unteransprüchen aufgeführten Maßnahmen sind vorteilhafte Weiterbildungen und Verbesserungen der im Anspruch 1 angegebenen Ventilnadel möglich.

Die in den Ansprüchen 2 bis 6 aufgezeigten Querschnittsformen des Ankerkopfes sind leicht herstellbar und führen zu ausreichend großen Strömungskanälen durch den Anker.

Die Ausbildung eines Bundes am Ankerkopf bringt den Vorteil mit sich, daß bei der Anlage des Bundes am Anker zwischen dem Anker und dem Verbindungsteil eine exakte vorbestimmte Zuordnung vorliegt.

### Zeichnung

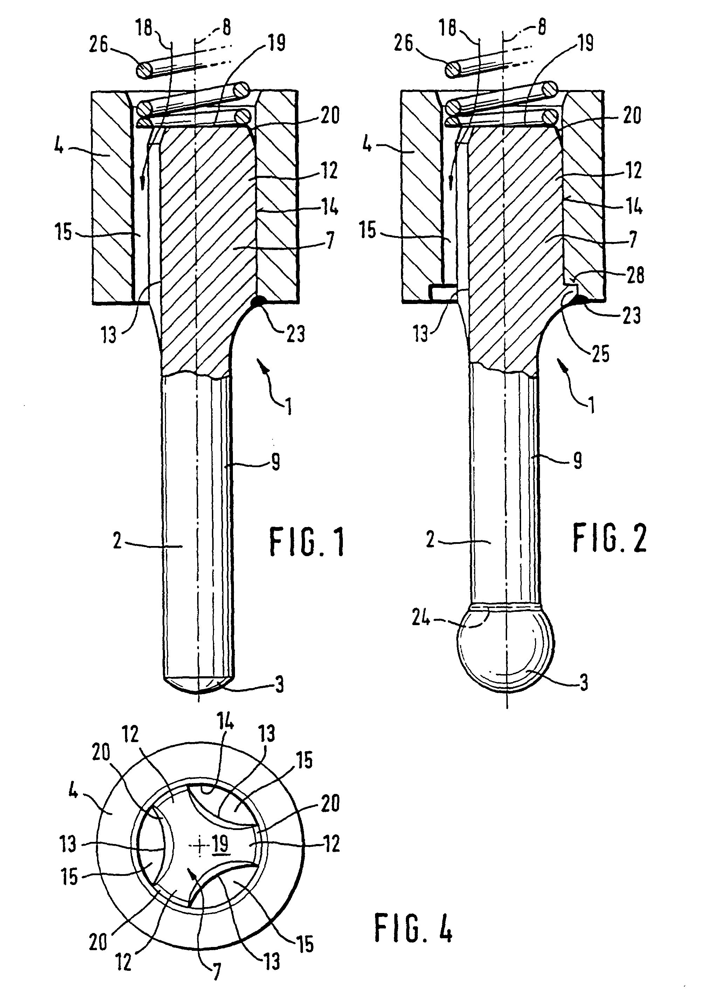

Ausführungsbeispiele der Erfindung sind in der Zeichnung vereinfacht dargestellt und in der nachfolgenden Beschreibung näher erläutert. Es zeigen Figur 1 bis 3 je ein Ausführungsbeispiel einer erfindungsgemäß ausgebildeten Ventilnadel in teilweiser Schnittdarstellung, Figur 4 bis 10 je eine Draufsicht auf eine erfindungsgemäß ausgebildete Ventilnadel mit einem Anker.

### Beschreibung der Ausführungsbeispiele

In der Figur 1 ist ein erstes Ausführungsbeispiel einer erfindungsgemäß ausgebildeten Ventilnadel 1 für ein elektromagnetisch betätigbares Ventil, insbesondere für ein Einspritzventil für Brennstoffeinspritzanlagen von Brennkraftmaschinen gezeigt. Die in der Figur 1 und den folgenden Figuren beschriebenen Ventilnadeln finden beispielsweise Verwendung in einem Einspritzventil für Brennstoffeinspritzanlagen, wie es in der DE 44 20 176 A1 gezeigt und beschrieben ist. Gebildet wird die Ventilnadel 1 aus einem Verbindungsteil 2, einem Ventilschließglied 3 und einem Anker 4 aus magnetisch leitendem Material. Das Ventilschließglied 3 ist beim vorliegenden Ausführungsbeispiel einteilig mit dem Verbindungsteil 2 als Kugelabschnitt an dem unteren Ende des Verbindungsteils 2 ausgebildet. Das Verbindungsteil 2 ist aus einem stangenförmigen Halbzeug bzw. Draht mit kreisrundem Querschnitt und einem Durchmesser von etwa 1,8 mm bis 2,5 mm gebildet, und zwar aus nicht rostendem Stahl. Von dem stangenförmigen Halbzeug bzw. Draht werden die Verbindungsteile 2 mit einer vorgegebenen Länge abgetrennt, z. B. abgesägt oder abgeschnitten. An dem dem Ventilschließglied 3 abgewandten oberen Ende des Verbindungsteils 2 ist ein Ankerkopf 7 ausgebildet, der senkrecht zu einer Längsachse 8 durch das Verbindungsteil 2 einen unrunden Querschnitt hat mit einer größeren Erstreckung senkrecht zur Längsachse 8, als der Abschnitt 9 des Verbindungsteils 2 zwischen dem Ankerkopf 7 und dem Ventilschließglied 3, der einen kreisrunden Querschnitt hat. Hergestellt wird der Ankerkopf 7 durch Kaltumformung des oberen Endes des Verbindungsteils 2. Dabei wird das obere Ende des Verbindungsteils 2 in ein Gesenk gelegt und mittels Druck in die durch das Gesenk vorgegebene Form ohne Zufuhr von Wärme axial gestaucht und gepreßt, um den Ankerkopf 7 zu bilden, der senkrecht zur Längsachse 8 nach der Kaltumformung eine größere Erstreckung hat, als in dem mit einem kreisrunden Querschnitt versehenen Abschnitt 9. Der Ankerkopf 7 wird bei der Kaltumformung beispielsweise in eine Form gebracht, in der er wie in Figur 4 dargestellt ist, einen Y-förmigen Querschnitt aufweist. Der Ankerkopf 7 gemäß Figur 1 und Figur 4 hat bei einem Y-förmigen Querschnitt senkrecht zur Längsachse 8 drei Stege 12, die etwa um 120° zueinander versetzt verlaufen und zwischen sich jeweils eine bogenförmig ausgebildete Einbuchtung 13 am Ankerkopf 7 begrenzen. Der Ankerkopf 7 ragt in eine Halteöffnung 14 des Ankers 4 derart, daß die Stege 12 mit ihrem kreisbogenförmigen Umfang die Wandung der Halteöffnung 14 berühren und zwischen jeder Einbuchtung 13 und der Wandung der Halteöffnung 14 je ein den Anker 4 in Richtung der Längsachse 8 durchdringender Strömungskanal 15 gebildet wird, über den ein Medium in Richtung des Pfeiles 18 strömen kann. Ausgehend von einer Stirnfläche 19 des Ankerkopfes 7 sind Abschrägungen 20 an den Stegen 12 und den Einbuchtungen 13 vorgesehen, die in Richtung zum Ventilschließglied 3 hin nach außen geneigt verlaufen und ein leichteres Einschieben des Ankerkopfes 7 in die Halteöffnung 14 bewirken bzw. ein leichteres Einströmen des Mediums in die Strömungskanäle 15. Das nach der Kaltumformung des Ankerkopfes 7 als ganzes gehärtete Verbindungsteil 2 wird an den Stegen 12 auf deren dem Ventilschließglied 3 zugewandter Seite mit dem Anker durch eine Schweißung 23, beispielsweise mittels Laser, verbunden. Der Ankerkopf 7 ragt nur so weit in die Halteöffnung 14 des Ankers 4, daß sich die Stirnfläche 19 des Ankerkopfes 7 innerhalb der Halteöffnung 14 befindet. Dadurch wird eine in die Halteöffnung 14 ragende und sich an der Stirnfläche 19 abstützende Rückstellfeder 26 des Einspritzventiles an ihrem der Ventilnadel 1 zugewandten Ende innerhalb des Ankers 4 geführt.

Bei den folgenden Figuren werden die gleichen Bezugszeichen für gleiche und gleichwirkende Teile benutzt. Das in Figur 2 dargestellte zweite Ausführungsbeispiel einer erfindungsgemäß ausgebildeten Ventilnadel 1 unterscheidet sich zum einen von dem ersten Ausführungsbeispiel nach Figur 1 dadurch, daß das Ventilschließglied 3 als selbständiges Teil in Form einer abgeflachten Kugel ausgebildet ist und mit dieser Abflachung an einer dem Ankerkopf 7 abgewandten ebenen Stirnfläche 24 des Verbindungsteils 2 anliegt und mit diesem verschweißt ist, und zum anderen dadurch, daß dem Ventilschließglied 3 zugewandt am Ankerkopf 7 ein Bund 25 ausgebildet ist, der bei in den Anker 4 eingeschobenem Ankerkopf 7 in einer Anlagenut 28 des Ankers 4 zur Anlage kommt und mit dem Anker verschweißt ist. Das Verbindungsteil 2 besteht beispielsweise aus austenitischem oder ferritischem Chromstahl.

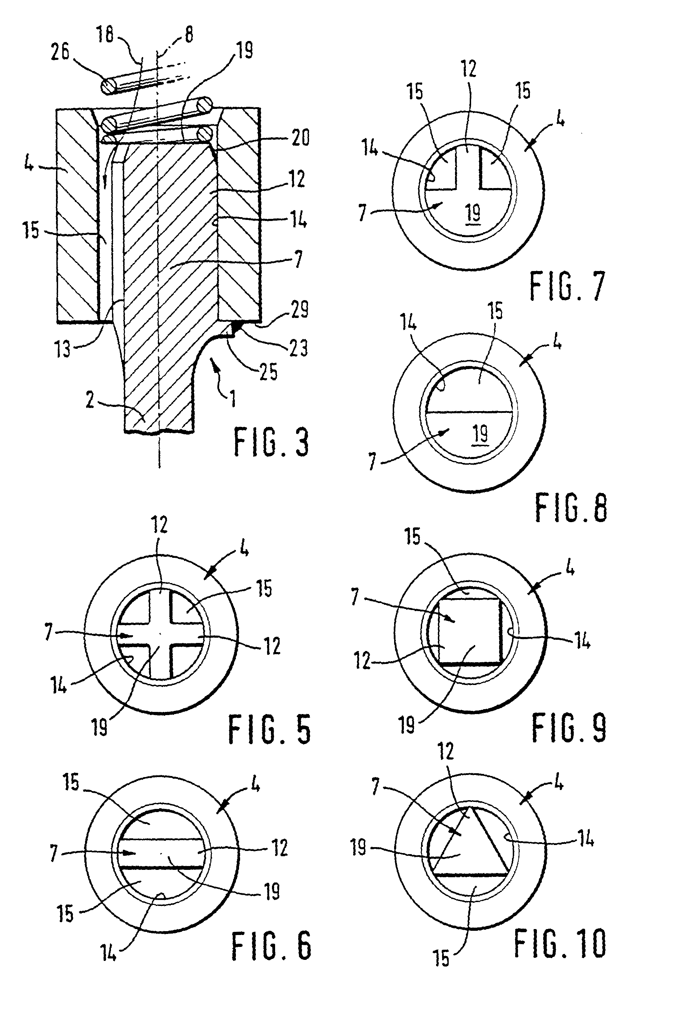

Bei dem in Figur 3 dargestellten dritten Ausführungsbeispiel einer erfindungsgemäßen Ventilnadel 1 liegt der Bund 25 des Ankerkopfes 7 an einer unteren Stirnfläche 29 des Ankers 4 an und ist mit diesem verschweißt.

In den Figuren 5 bis 10 sind weitere verschiedene Querschnittsformen des Ankerkopfes 7 gezeigt. Bei der Ausführungsform nach Figur 5 weist der Ankerkopf 7 senkrecht zur Längsachse 8 einen kreuzförmigen Querschnitt mit vier Stegen 12 auf und bildet mit der Halteöffnung 14 des Ankers 4 vier Strömungskanäle 15.

Bei dem Ausführungsbeispiel nach Figur 6 hat der Ankerkopf 7 einen plattenförmigen Querschnitt senkrecht zur Längsachse 8 mit zwei parallel zueinander verlaufenden flachen Flächen und zwei zur Halteöffnung 14 hin runden Endflächen und begrenzt zwei Strömungskanäle 15.

Die Figur 7 zeigt den Querschnitt eines Ankerkopfes 7 senkrecht zur Längsachse 8, bei dem von einem halbkreisförmigen Querschnitt ein Steg 12 mittig absteht und zwei Strömungskanäle 15 bildet. In Figur 8 hat der Ankerkopf 7 senkrecht zur Längsachse 8 nur einen halbkreisförmigen Querschnitt und begrenzt nur einen Strömungskanal 15 mit dem Anker 4.

In den Figuren 9 und 10 hat der Ankerkopf 7 senkrecht zur Längsachse 8 einen dreieckförmigen bzw. viereckförmigen Querschnitt und begrenzt mit dem Anker 4 drei bzw. vier Strömungskanäle 15. In nicht dargestellter Weise kann der Ankerkopf 7 senkrecht zur Längsachse auch fünfeckförmig oder mehreckförmig ausgebildet sein

## Patentansprüche

1. Ventilnadel (1) für ein elektromagnetisch betätigbares Ventil, insbesondere für ein Einspritzventil für Brennstoffeinspritzanlagen von Brennkraftmaschinen, mit einem Ventilschließglied und einem sich entlang einer Längsachse erstreckenden Verbindungsteil (2), dessen dem Ventilschließglied abgewandtes Ende einen Ankerkopf (7) bildet, der in eine Halteöffnung eines Ankers ragt und mit diesem verbunden ist, wobei zwischen dem Ankerkopf und der Wandung der Halteöffnung des Ankers wenigstens ein in Richtung der Längsachse verlaufender Strömungskanal (15) gebildet wird, dadurch gekennzeichnet, daß das Verbindungsteil (2) stangenförmig mit einem kreisrunden Querschnitt ausgebildet ist und der Ankerkopf (7) einen unrunden Querschnitt hat, der durch Kaltumformung hergestellt ist und eine größere Erstreckung in senkrechter Richtung zur Längsachse (8) hat als der kreisrunde Querschnitt des Verbindungsteils (2).

2. Ventilnadel nach Anspruch 1, dadurch gekennzeichnet, daß der Ankerkopf (7) einen kreuzförmigen Querschnitt hat.

3. Ventilnadel nach Anspruch 1, dadurch gekennzeichnet, daß der Ankerkopf (7) einen Y-förmigen Querschnitt hat.

4. Ventilnadel nach Anspruch 1, dadurch gekennzeichnet, daß der Ankerkopf (7) einen kreisabschnittförmigen Querschnitt hat.

5. Ventilnadel nach Anspruch 1, dadurch gekennzeichnet, daß der Ankerkopf (7) einen plattenförmigen Querschnitt hat.

6. Ventilnadel nach Anspruch 1, dadurch gekennzeichnet, daß der Ankerkopf (7) einen dreieckförmigen oder mehreckförmigen Querschnitt hat.

7. Ventilnadel nach Anspruch 1, dadurch gekennzeichnet, daß dem Ventilschließglied (3) zugewandt am Ankerkopf (7) ein Bund (25) vorgesehen ist, der senkrecht zur Längsachse (8) eine größere Erstreckung hat als die Halteöffnung (14) und an dem Anker (4) anliegt.

8. Ventilnadel nach Anspruch 1 oder 7, dadurch gekennzeichnet, daß Anker (4) und Ankerkopf (7) durch Schweißen (23) miteinander verbunden sind.

9. Ventilnadel nach Anspruch 1, dadurch gekennzeichnet, daß das Ventilschließglied (3) durch Schweißen mit dem Verbindungsteil (2) verbunden ist.

10. Verfahren zur Herstellung einer Ventilnadel (1) für ein elektromagnetisch betätigbares Ventil, insbesondere für ein Einspritzventil für Brennstoffeinspritzanlagen von Brennkraftmaschinen, mit einem Ventilschließglied und einem sich entlang einer Längsachse erstreckenden Verbindungsteil (2), dessen dem Ventilschließglied abgewandtes Ende einen Ankerkopf (7) bildet, der in eine Halteöffnung eines Ankers ragt und mit diesem verbunden ist, wobei zwischen dem Ankerkopf (7) und der Wandung der Halteöffnung des Ankers wenigstens ein in Richtung der Längsachse verlaufender Strömungskanal (15) gebildet wird, nach einem der Ansprüche 1 bis 9, dadurch gekennzeichnet, daß zunächst von einem stangenförmigen Halbzeug mit kreisförmigem Querschnitt das Verbindungsteil (2) abgetrennt wird, dann der Ankerkopf (7) an dem Verbindungsteil (2) durch Kaltumformung hergestellt wird und dann der Anker (4) auf den Ankerkopf (7) gesteckt und mit diesem verschweißt wird.

## Claims

1. Valve needle (1) for an electromagnetically actuable valve, in particular for an injection valve for fuel injection systems of internal combustion engines, with a valve-closing member and with a connecting part (2) which extends along a longitudinal axis and of which the end facing away from the valve-closing member forms an armature head (7) which projects into a holding orifice of an armature and is connected to the latter, at least one flow duct (15) which runs in the direction of the longitudinal axis being formed between the armature head and the wall of the holding orifice of the armature, characterized in that the connecting part (2) is produced in the form of a rod with a circular cross section and the armature head (7) has a non-round cross section which is produced by cold forming and which has a greater extent in the direction perpendicular to the longitudinal axis (8) than the circular cross section of the connecting part (2).

2. Valve needle according to Claim 1, characterized in that the armature head (7) has a cruciform cross section.

3. Valve needle according to Claim 1, characterized in that the armature head (7) has a Y-shaped cross section.

4. Valve needle according to Claim 1, characterized in that the armature head (7) has a cross section in the form of a segment of a circle.

5. Valve needle according to Claim 1, characterized in that the armature head (7) has a plate-shaped cross section.

6. Valve needle according to Claim 1, characterized in that the armature head (7) has a triangular or polygonal cross section.

7. Valve needle according to Claim 1, characterized in that a collar (25) is provided, facing the valve-closing member (3), on the armature head (7), said collar having a greater extent than the holding orifice (14) perpendicularly to the longitudinal axis (8) and bearing against the armature (4).

8. Valve needle according to Claim 1 or 7, characterized in that the armature (4) and the armature head (7) are connected to one another by welding (23).

9. Valve needle according to Claim 1, characterized in that the valve-closing member (3) is connected to the connecting part (2) by welding.

10. Method for producing a valve needle (1) for an electromagnetically actuable valve, in particular for an injection valve for fuel injection systems of internal combustion engines, with a valve-closing member and with a connecting part (2) which extends along a longitudinal axis and of which the end facing away from the valve-closing member forms an armature head (7) which projects into a holding orifice of an armature and which is connected to the latter, at least one flow duct (15) which runs in the direction of the longitudinal axis being formed between the armature head (7) and the wall of the holding orifice of the armature, according to one of Claims 1 to 9, characterized in that, first, the connecting part (2) is separated from a rod-shaped semi-finished product of circular cross section, then the armature head (7) is produced on the connecting part (2) by cold forming, and then the armature (4) is slipped onto the armature head (7) and welded to the latter.

## Revendications

1. Aiguille (1) de soupape à commande électromagnétique, notamment pour un injecteur d'une installation d'injection de carburant d'un moteur à combustion interne, comprenant
- un organe d'obturation et une pièce de liaison (2) s'étendant suivant un axe longitudinal et dont l'extrémité non tournée vers l'organe d'obturation forme une tête d'induit (7) qui pénètre dans un orifice de fixation d'un induit en étant reliée à celui-ci, et
- entre la tête d'induit et la paroi de l'orifice de fixation de l'induit, au moins un canal d'écoulement (15) dirigé suivant l'axe longitudinal,
caractérisée en ce que
la pièce de liaison (2) est réalisée en forme de tige à section circulaire, et la tête d'induit (7) a une section non circulaire réalisée par formage à froid avec une plus grande extension dans la direction perpendiculaire à l'axe longitudinal (8), que la section circulaire de la pièce de liaison (2).

2. Aiguille selon la revendication 1,
caractérisée en ce que
la tête d'induit (7) a une section cruciforme.

3. Aiguille selon la revendication 1,
caractérisée en ce que
la tête d'induit (7) a une section en Y.

4. Aiguille selon la revendication 1,
caractérisée en ce que
la tête d'induit (7) a une section semi-circulaire.

5. Aiguille selon la revendication 1,
caractérisée en ce que
la tête d'induit (7) a une section en forme de plaque.

6. Aiguille selon la revendication 1,
caractérisée en ce que
la tête d'induit (7) a une section triangulaire ou polygonale.

7. Aiguille selon la revendication 1,
caractérisée en ce que
la tête d'induit (7) est munie d'une collerette (25) du côté tourné vers l'organe d'obturation (3), cette collerette ayant, perpendiculairement à l'axe longitudinal (8), une extension plus grande que l'orifice de fixation (14) pour venir contre l'induit (4).

8. Aiguille selon l'une quelconque des revendications 1 ou 7,
caractérisée en ce que
l'induit (4) et la tête d'induit (7) sont reliés par une soudure (23).

9. Aiguille selon la revendication 1,
caractérisée en ce que
l'organe d'obturation (3) est relié par une soudure à la pièce de liaison (2).

10. Procédé de fabrication d'une aiguille (1) pour une soupape à commande électromagnétique, notamment un injecteur pour l'installation d'injection d'un moteur à combustion interne, comprenant un organe d'obturation et une pièce de liaison (2) s'étendant suivant un axe longitudinal et dont l'extrémité non tournée vers l'organe d'obturation forme une tête d'induit (7) pénétrant dans un orifice de fixation d'un induit, en étant reliée à celui-ci et, entre la tête d'induit (7) et la paroi de l'orifice de fixation de l'induit, au moins dans la direction de l'axe longitudinal, on a un canal (15), selon l'une des revendications 1 à 9,
caractérisé en ce qu'
on sépare tout d'abord la pièce de liaison (2) d'un produit semi-fini en forme de tige à section circulaire puis on réalise la tête d'induit (7) sur la pièce de liaison (2) en procédant par formage à froid, et on engage ensuite l'induit (4) sur la tête d'induit (7) puis on les soude l'un à l'autre.
